# EUROPEAN PATENT SPECIFICATION

(11) **EP 1 632 304 B1**
(45) Date of publication and mention of the grant of the patent: **20.08.2008**
(21) Application number: 05019018.0
(22) Date of filing: 01.09.2005
(51) Int. Cl.: B23K 9/133, B23K 9/28, B23K 37/02, B25J 9/06

(54) **Arc welding robot attached to a ceiling or a wall including treating torch cable structure**
Ein an einem Deckel oder einer Wand angeordneter Lichtbogenschweissroboter mit einer Brennerkabel-Behandlungstruktur
Robot de soudage à l'arc fixé au plafond ou sur un mur comprenant une structure de traitement du câble de la torche

(30) Priority: 06.09.2004 JP 2004258755
(43) Date of publication of application: 08.03.2006
(73) Proprietor: FANUC LTD, Minamitsuru-gun, Yamanashi 401-0597 (JP)
(72) Inventor: Nihei, Ryo, Fujiyoshida-shi, Yamanashi 403-0005 (JP); Inoue, Toshihiko, Fujiyoshida-shi, Yamanashi 403-0017 (JP); Nakayama, Kazutaka, Minamitsuru-gun, Yamanashi 403-0023 (JP); Iwayama, Takatoshi FANUC Manshonharimomi, Minamitsuru-gun Yamanashi 401-0511 (JP)
(74) Representative: Schmidt, Steffen J.

(56) References cited:
- EP-A- 1 440 760
- DE-U1- 29 720 048
- US-A- 4 883 938
- PATENT ABSTRACTS OF JAPAN vol. 1996, no. 07, 31 July 1996 (1996-07-31) -& JP 08 057648 A (ARACO CORP), 5 March 1996 (1996-03-05)
- PATENT ABSTRACTS OF JAPAN vol. 1999, no. 08, 30 June 1999 (1999-06-30) -& JP 11 077306 A (HITACHI CONSTR MACH CO LTD), 23 March 1999 (1999-03-23)

## Description

The present invention relates to a structure for treating or handling a torch cable for an industrial robot carrying out arc welding (hereinafter referred to an arc welding robot or merely to a robot) and, particularly, to a structure for treating or handling a torch cable for an arc welding robot of a ceiling-suspension type or a wall-hanging type according to the preamble of claims 1, 2 and 4 (see, for example, JP 8/057648 A).

### Description of the Related Art

An arc welding robot often carries out a welding operation while inserting an arm or a welding torch provided at a distal end of the robot into a narrow gap between the work, a jig and peripheral equipment. In such a case, there is no problem about the arm or the welding torch provided at a distal end of the robot since an area in which the arm or the welding torch may interfere with the periphery is narrow. On the contrary, the torch cable is liable to interfere with the periphery of the arm or the welding torch. This is because the torch cable is in a loose state or a slackened state to deliver the welding torch in a stable state, which, however, widens the area to interfere with the periphery.

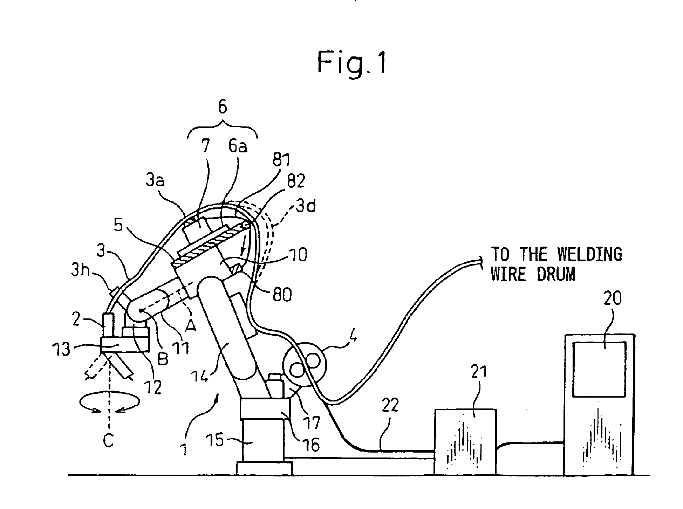

As one of countermeasures for solving such a problem, Japanese Patent Application No. 2004-194593 proposes an arc welding robot of a floor surface installation type in which the welding torch is rotatable about an axis offset at a constant distance from a final rotary axis of the robot. A slide mechanism is provided on a front arm base of the robot, and an intermediate portion of a torch cable is attached to a slider on the slide mechanism so that a force for pulling the slider opposite to the welding torch is applied. Fig. 1 diagrammatically illustrates this means, wherein reference numeral 1 denotes an arc welding robot of a six-axes type. The arc welding robot 1 is installed on a floor surface and has an upper arm 14 extending upward from a robot base 15. At a tip end of a front arm base 10 attached to an upper end of the upper arm 14, a first wrist element 11 is provided to be rotatable about a first axis A, and a second wrist element 12 is provided on the first wrist element 11 to be rotatable about a second axis B.

A welding torch 2 is supported on the second wrist element 12, via a transmission mechanism 13, to be rotatable about a third axis C positioned generally perpendicular to the second axis B and apart, a predetermined distance, from the first axis A. In other words, the welding torch 2 is supported to be rotatable about the axis C positioned parallel to the final rotary axis of the robot while being away therefrom by a predetermined distance.

Reference numeral 4 denotes a wire delivery device for delivering a welding wire to the welding torch 2 by using a torch cable 3, the wire delivery device 4 is supported on a wire delivery device support 17 fixed on a rotary cylinder 16 of the robot 1. There is a slide mechanism 6 on the front arm base 10 via a support base 5. The slide mechanism 6 has a linear guide 6a and a slider 7 attached to the linear guide 6a to be movable generally parallel to the first axis A. An intermediate portion of the torch cable 3 is clamped (attached) to the slider 7. The torch cable 3 extends from this intermediate attachment portion 3a and is connected to the welding torch 2 through the upper space above the first wrist element 11 and an inserting guide 3h.

In the slide mechanism 6, a mechanism is provided for generating a force to the slider 7 to always draw the latter rearward. In the illustrated embodiment, an end of a wire 81 is connected to the vicinity of a rear end of the slider 7, while the other end of the wire 81 is connected to a tensioning device 80. The wire 81 connects the slider 7 to the tensioning device 80 via a pulley 82 attached to the rear end of a support base 5. The tensioning device 80 itself uses a spring or an pneumatic cylinder, or another device, and is attached, for example, to a rear portion of the front arm base 10. Reference numeral 3d denotes the slack in the torch cable 3 generated when the slider 7 is drawn rearward of the front arm base 10.

The power supply to the welding wire and the wire delivery device 4 is carried out by a welding power source device 21 via a power supply cable 22. The control of the power supply (control of the welding voltage/current and control of wire delivery) is carried out based on a command issued from a robot controller 20 to the welding power source device 21. When the welding operation is carried out, the robot 1 moves to a target position at which the welding wire is reeled out so that welding torch 2, mounted to a tip end of the wrist, is located at a welding position on the object to be welded, while maintaining the welding torch 2 in a designated posture. The robot controller 20 also issues a welding command at the same time to the welding power source device 21, whereby the welding power source device 21 operates in synchronism with the operation of the robot 1 to control the welding voltage and current for the welding wire portion of the tip end of the welding torch.

In the arc welding robot of a floor surface installation type, according to such a structure, even if the posture of the welding torch varies, the behavior of the torch cable 3 does not considerably change, whereby it is possible to minimize the interference of the torch cable 3 with the work, a jig and/or peripheral equipment, as well as to realize the stable delivery of the welding wire. On the other hand, in the welding system in which the robot is suspended from a ceiling for the purpose of saving the installation space and/or exchanging the jig with a higher degree of freedom, the posture of the robot wrist axis during the welding operation is reverse to that in the floor surface installation type, as the work is located at a position lower than the robot. If the robot base 15 is fixed to the ceiling in the above structure so that the robot is inverted as a whole, there is a difficulty due to the limitation of the operative range of the wrist axis. That is, the operative range of the first and second wrist elements is limited to be narrower than ±180 degrees due to the restriction of flexibility of the torch cable, and when the robot is suspended from the ceiling, there has been a problem to be solved in that the operation becomes difficult in a state wherein a tip end of the torch is directed upward or downward.

There may be a case wherein a robot is installed in a wall extending from the floor surface toward the ceiling in the vertical direction in view of the circumstances of the operation site, which system is referred to as "a wall-hanging installation type". Also, when such a wall-hanging installation type is employed, a suitable structure for treating a torch cable for an industrial robot has been desired.

The closest prior art document JP 08/057648 A shows a welding robot of a ceiling-suspension type according to the preamble part of the independent claims. This welding robot underlies the above mentioned problems as the torch cable is not sufficiently guided and drawn into a tensioned state in order to reliably avoid an interference with a work, a jig and/or peripheral equipments.

Document EP 1 440 760 A1 shows a welding robot of a floor surface installation type, similar to the one discussed with regard to Japanese patent application No. 2004-194593.

The German utility model DE 297 20 048 U1 moreover also discloses a floor surface installation type welding robot wherein a holding cable is tensioned by means of a slider. The purpose of the holding cable is to provide an overhead suspension for the torch cable, which is not pretentioned but rather loosely mounted to the robot arm.

Accordingly, an object of the present invention is to provide a structure for treating a torch cable in an arc welding robot of a ceiling-suspension type or a wall-hanging type, capable of stably maintaining the behaviour of the torch cable, minimizing the interference of the torch cable with a work, a jig and/or peripheral equipments and realizing a stable delivery of a welding wire, based on a technical system disclosed in Japanese Patent Application No. 2004-194593 (in which a rotary axis of a welding torch is shifted from the final rotary axis of the robot).

### SUMMARY OF THE INVENTION

The present invention solves the above-mentioned problems in the arc welding robot of a ceiling-suspension type, or a wall-hanging type, by adopting a structure for treating or handling a torch cable modified to carry out the welding operation without any difficulty while a tip end of the welding torch directs toward the floor surface, based on the concept and advantages of a technology disclosed in Japanese Patent Application No. 2004-194593.

The present invention is defined in claims 1, 2 and 4.

According to the present invention, in the arc welding robot of a ceiling-suspension type and a wall-hanging type, as the torch cable is not excessively drawn and thus not entangled with the front arm or the torch cable is not excessively loose or slackened and thus does not largely vary its curvature, it is possible to stabilize the delivery of the welding wire and the welding operation. Also, even if the ceiling-suspension type or the wall-hanging type is employed, a problem, in that it is difficult to dispose the welding torch at a position or posture suitable for the welding operation, is avoidable. Another advantage is that almost all elements used in the inventive structure for treating or handling the torch cable are common to those used in the system disclosed in Japanese Patent Application No. 2004-194593. Thus, it is possible to provide the most suitable structure for treating or handling the torch cable in accordance with various conditions for installing the robot by only adding and/or exchanging a minimum number of members, so that it is economical to use the structure of the present invention.

These and other objects, features and advantages of the present invention will be more apparent in light of the.detailed description of exemplary embodiments thereof as illustrated by the drawings.

### BRIEF DESCRIPTION OF THE DRAWINGS

In the drawings:
Fig. 1 is an illustration for explaining the prior art arc welding robot of a floor surface installation type;
Fig. 2a is a front view of an overall structure of a first embodiment according to the inventive arc welding robot;
Fig. 2b is a right side view of an overall structure of the first embodiment according to the inventive arc welding robot;
Fig. 2c is a right side view of an overall structure of a second embodiment according to the inventive arc welding robot;
Fig. 3a is a front view of an overall structure of a third embodiment according to the inventive arc welding robot;
Fig. 3b is a right side view of an overall structure of the third embodiment according to the inventive arc welding robot;
Fig. 4a is a front view of an overall structure of a fourth embodiment according to the inventive arc welding robot;
Fig. 4b is a top view of an overall structure of the fourth embodiment according to the inventive arc welding robot;
Fig. 4c is a front view of an overall structure of variant according to the inventive arc welding robot;
Fig. 5a is a front view of an overall structure of a fifth embodiment according to the inventive arc welding robot;
Fig. 5b is a front view of an overall structure of a sixth embodiment according to the inventive arc welding robot;
Fig. 6 is a sectional view of one example of a mechanism for supporting and rotating a welding torch;
Fig. 7a is an illustration for explaining one example of a slide mechanism for a welding wire delivery device, wherein a slider is subjected to a linear motion; and
Fig. 7b is an illustration for explaining one example of a slide mechanism for a welding wire delivery device, wherein the slider is subjected to a swing motion.

### DETAILED DESCRIPTION

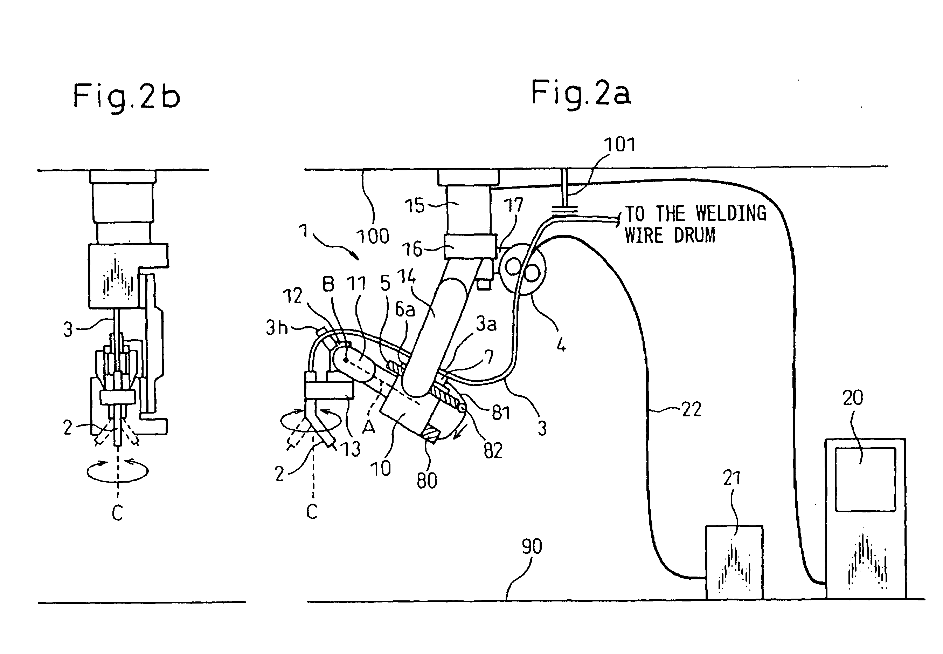

Embodiments of the present invention will be described below with reference to the drawings. Figs. 2a and 2b illustrate a front view and a right side view, respectively, of an overall structure of a first embodiment of an arc welding robot according to the present invention. Reference 1 denotes an arc welding robot of a six-axes type, a robot base 15 of which is installed not on a floor surface 90 but on a ceiling 100 whereby an upper arm 14 extends downward from the robot base 15. At a tip end of a front arm base 10, a first wrist element 11 is provided to be rotatable about a first axis A, and a second wrist element 12 is provided on the first wrist element 11 to be rotatable about a second axis B.

A welding torch 2 is supported on the second wrist element 12 via a transmission mechanism 13 to be rotatable about a third axis C disposed at a predetermined distance from the first axis A while remaining generally vertical to the second axis B, whereby the welding torch 2 is rotatable about the axis C parallel to the final rotary axis of the robot and offset at a predetermined distance therefrom. The detail of the transmission mechanism will be described hereinafter.

The posture of the welding torch 2 relative to the second wrist element 12 (the direction of the tip end of the torch) is selected so that the tip end of the welding torch 2 is directed downward when the robot occupies the posture wherein the tip end of the second wrist element 12 is located lower than the second axis B as illustrated. Thereby, it is possible to carry out the welding operation on the work (not shown) located on the floor surface 90 side while maintaining the reasonable posture of the robot.

Reference numeral 4 denotes a wire delivery device for delivering a welding wire to the welding torch 2 by means of a torch cable 3, the wire delivery device 4 is provided via a wire delivery device support 17 fixed to a rotary cylinder 16 of the robot 1. Also, a slide mechanism is provided on the front arm base 10 via a support base 5. The slide mechanism includes a linear guide 6a and a slider 7 attached thereto to be movable generally parallel to the first axis A on the linear guide 6a. An intermediate portion of the torch cable 3 is clamped (attached) to the slider 7. In the illustrated posture of the robot (that is, the position of the second axis B is above the front arm base 10 and a tip end of the second wrist element 12 is below the position of the second axis B), the torch cable 3 passes from the intermediate attachment portion 3a through a space above the first wrist element 11 and an insert guide 3h and is connected to the welding torch 2. In this regard, it may be possible to increase the degree of freedom in the motion of the torch cable 3 by using a freely swingable slider 7 in the slide mechanism. An example of such a slider mechanism will be described later.

The slide mechanism is provided with a mechanism for generating a force for always drawing the slider 7 rearward. While there are various types of such a mechanism, that in which the slider 7 is drawn by a mechanism in which one end of a wire 81 is connected to the rear end of the slider 7 and the other end of the wire 81 is connected to a tensioning device 80 is shown in the drawings. The wire 81 connects the slider 7 to the tensioning device 80 via a pulley 82 attached to a rear end of the support base 5. The tensioning device 80 itself uses a spring, a pneumatic cylinder or another device, and is attached, for example, to a rear portion of the front arm base 10. Due to the existence of such a slide mechanism, no large excessive length of the torch cable 3 is generated even if the wrist axis is moved considerably.

In this regard, reference numeral 101 denotes a welding wire holding guide attached to the ceiling 100, having a function for holding the welding wire drawn from a welding wire drum (not shown) and insertingly guiding the same. The welding wire passing through the welding wire holding guide 101 is combined with a power supply cable 22, an assist gas hose (not shown) or others in the wire delivery device 4 to complete the torch cable 3. As stated above, the torch cable 3 is connected to a base of the welding torch 2 via the slider 7 and the inserting guide 3h.

The power supply to the welding wire and the wire delivery device 4 is carried out via the power supply cable 22 by the welding power source device 21. The control of the power supply (control of welding voltage/current and control of wire delivery) is carried out based on a command issued from a robot controller 20. When the welding operation is carried out, the robot 1 moves to a target position at which the welding wire is reeled out so that the welding torch 2 mounted to a tip end of the wrist is located at a welding position on the object to be welded, in accordance with the command from the robot controller 20, while maintaining the welding torch 2 in a designated posture. The robot controller 20 also issues the welding command at the same time to the welding power source device 21 whereby the welding power source device 21 operates in synchronism with the operation of the robot 1 to control the welding voltage and current for the welding wire portion of a tip end of the welding torch.

In the ceiling-suspension type arc welding robot, according to this structure, even if the posture of the welding torch 2 varies, it is possible to suppress a large change in the behavior of the torch cable 3 and minimize the interference of the torch cable 3 with the work, a jig or peripheral equipment, whereby the stable delivery of the welding wire is realized.

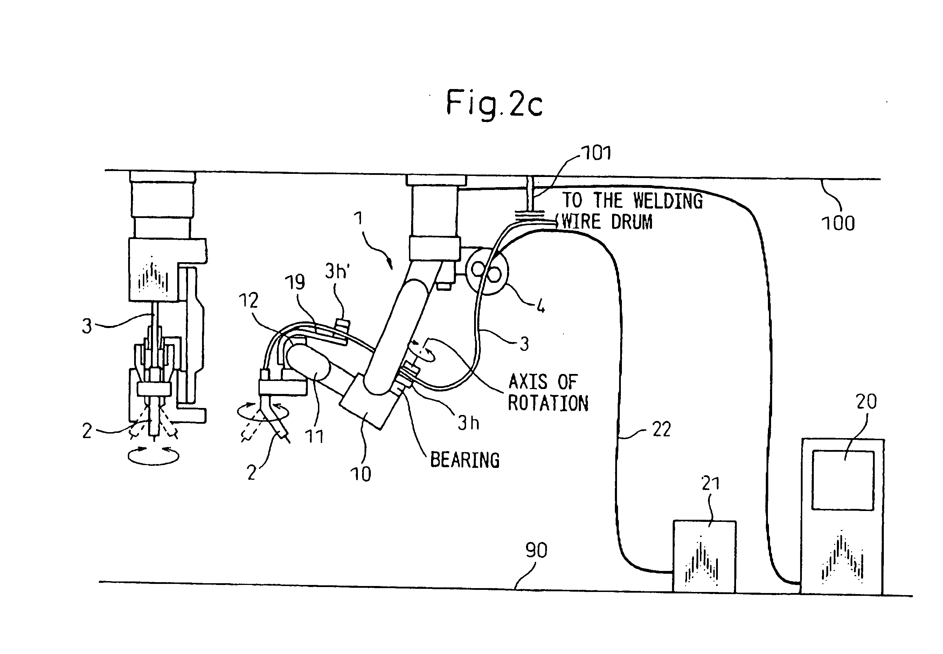

Fig. 2c illustrates a modification of the first embodiment. In Fig. 2c, the slide mechanism is eliminated and, instead, the inserting guide 3h is directly provided on the front arm base 10. The inserting guide 3h is designed to have a guide hole larger than an outer diameter of the torch cable 3, so that the torch cable 3 freely reciprocates in a direction generally parallel to the length of the front arm. Also, as illustrated, a inserting guide 3h' is provided on a plate-like guide 19 attached to the second wrist element 12 to hold the torch cable 3. Even if the robot wrist shaft operates, the torch cable is maintained in a stable state by these inserting guides 3h and 3h' while always being held along the front arm. As illustrated, the inserting guide 3h is rotatable about a rotary axis by a bearing.

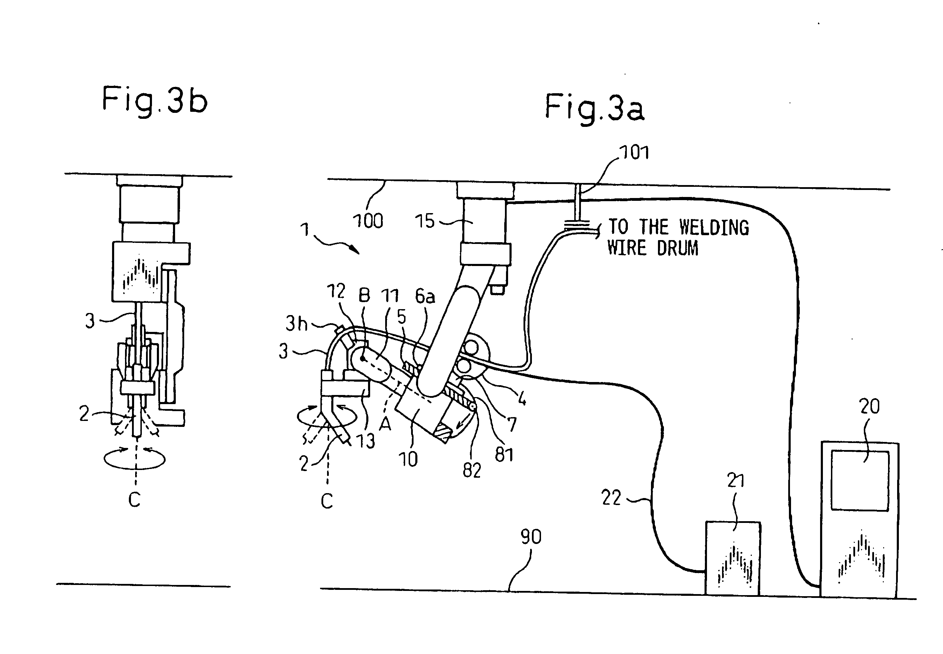

Figs. 3a and 3b illustrate a front view and a right side view, respectively, of an overall structure of a third embodiment of an arc welding robot according to the present invention. The provision of the robot 1 and the attachment posture of the welding torch are the same as in the first embodiment. That is, a robot base 15 of an arc welding robot 1 is not installed on a floor surface 90 but on a ceiling 100, and a front arm 14 extends downward from the robot base 15. At a tip end of a front arm base 10, a first wrist element 11 is provided to be rotatable about the first axis A, and a second wrist element 12 is provided on the first wrist element 11 to be rotatable about the second axis B.

A welding torch 2 is supported by the second wrist element 12 via a transmission mechanism 13 (a concrete example thereof will be described later) to be rotatable about the third axis C generally vertical to the second axis B and apart from the first axis A at a predetermined distance. The welding torch 2 is rotatable about the axis C parallel to the final rotary axis of the robot and offset at a predetermined distance therefrom.

The attachment posture of the welding torch 2 relative to the second wrist element 12 (the direction of a tip end of the welding torch 2) is selected so that the tip end of the welding torch 2 is directed downward when the robot is in a posture wherein the tip end of the second wrist element 12 is located lower than the position of the second axis B. Accordingly, the welding operation of the work (not shown) located on the floor surface 90 side can be carried out while maintaining the robot in a reasonable posture.

Reference numeral 4 denotes a wire delivery device for delivering the welding wire to the welding torch 2 by using the torch cable 3, the wire delivery device 4 is provided on a slide mechanism attached to the front arm base 10 via the support base 5 in this embodiment. The slide mechanism is the same as used in the first embodiment, including a linear guide 6a and a slider 7 movable generally parallel to the first axis A on the linear guide 6a, and the wire delivery device 4 is fixed to the slider 7. In this regard, the welding wire delivery device 4 itself may also operate as a slider.

The torch cable 3 extends from the welding wire delivery device 4, passing through the space above the first wrist element 11 and the inserting guide 3h, and is connected to the welding torch 2 while maintaining the posture of the robot shown in the drawings (wherein the position of the second axis B is above the front arm base 10 and the tip end of the second wrist element 12 is below the position of the second axis B). Also, as in the same manner as in the first embodiment, it may be possible to increase the degree of motion freedom of the torch cable 3 by using the freely swingable slider 7 in the slide mechanism (a concrete example thereof will be described later).

As in the first embodiment, a mechanism for drawing the slider 7 is shown in which one end of the wire 81 is connected to the rear end of the slider 7 and the other end of the wire 81 is connected to a tensioning device 80. The wire 81 connects the slider 7 to the tensioning device 80 via a pulley 82 attached to the rear end of the support base 5. The tensioning device 80 itself uses a spring, a pneumatic cylinder or the like, for example, to the rear portion of the front arm base 10. Due to the existence of such a slide mechanism, a large excessive length of the torch cable 3 is eliminated even if the wrist axis moves considerably.

In this regard, reference numeral 101 denotes a welding wire holding guide attached to the ceiling 100, having a function for holding the welding wire drawn from a welding wire drum (not shown) and insertingly guiding the same. The welding wire passing through the welding wire holding guide 101 is combined with a power supply cable 22, an assist gas hose (not shown) or others in the wire delivery device 4 to complete the torch cable 3. As described before, the torch cable 3 from the welding wire delivery device 4 is connected to a base of the welding torch 2 via the inserting guide 3h.

The power supply to the welding wire and the wire delivery device 4 and the control thereof are carried out in the same manner as in the first embodiment from the welding power source device 21 via the power supply cable 22. The control of the power supply (control of welding voltage/current and control of wire delivery) is carried out by a command issued from the robot controller 20 to the welding power source device 21. During the welding operation, the robot 1 moves to a target position at which the welding wire is reeled out so that the welding torch 2 mounted to a tip end of the wrist is located a welding position on the object to be welded, while maintaining the welding torch 2 in a designated posture in accordance with a command issued from the robot controller 20. The robot controller 20 also issues the welding command at the same time to the welding power source device 21 whereby the welding power source device 21 operates in synchronism with the operation of the robot 1 to control the welding voltage and current for the welding wire portion of a tip end of the welding torch.

Similar to the first embodiment, in the arc welding robot of a ceiling-suspension type according to this embodiment in which the welding wire delivery device is provided on the slide mechanism, it is possible to suppress the large change in the behavior of the torch cable 3, even if the posture of the welding torch 2 varies, and to minimize the interference of the torch cable 3 with the work, a jig and peripheral equipment, whereby the stable delivery of the welding wire is realized.

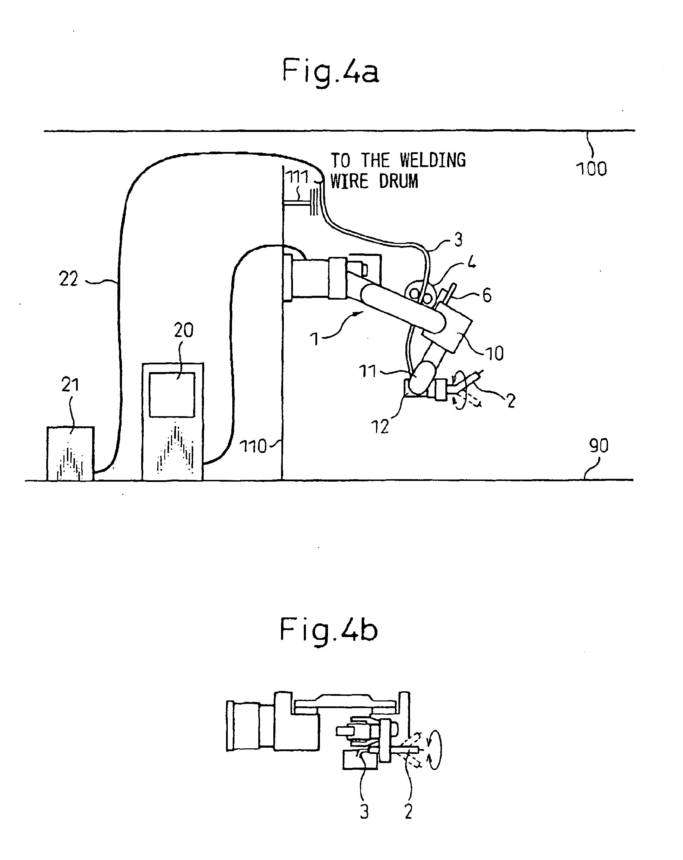

Figs. 4a and 4b illustrate a front view and a top view, respectively, of an overall structure of a fourth embodiment of an arc welding robot according to the present invention. In this embodiment, a robot base 15 of an arc welding robot 1 is provided in a wall extending upward from a floor surface 90 toward a ceiling 100, and an upper arm 14 extends from the robot base 15 in the lateral direction. At a tip end of a front arm base 10 attached to the vicinity of a tip end of the upper arm 14, a first wrist element 11 is provided to be rotatable about a first axis A, and a second wrist element 12 is provided on the first wrist element 11 to be rotatable about a second axis B.

A welding torch 2 is supported by the second wrist element 12 via a transmission mechanism 13 (a concrete example thereof will be described later) to be rotatable about a third axis C extending generally vertical to the second axis B and away from the first axis A at a predetermined distance. The welding torch 2 is rotatable about the axis C parallel to a final rotary axis of the robot and offset therefrom at a predetermined distance.

As shown in the drawings, the attachment posture of the welding torch 2 relative to the second wrist element 12 is selected so that a tip end of the welding torch 2 is directed away from the wall 110 when the robot is in a posture in which a tip end of the second wrist element 12 is located on a side farther from the wall 110 than the second axis B. Thereby, it is possible to carry out the welding operation on a work (not shown) located farther from the wall 110 than the robot 1 (This position makes it easy to carry out the operation) in the reasonable posture of the robot.

Reference numeral 4 denotes a wire delivery device for delivering a welding wire to the welding torch 2 by using a torch cable 3, provided on a slide mechanism to be located on the lateral side of a front arm base 10 in this embodiment. That is, a linear guide 6a attached to the lateral side of the front arm base via a support base 5 and a slider 7 movable generally parallel to the first axis A or the linear guide 6a are provided, and the wire delivery device 4 is fixed to the slider 7. In this regard, the welding wire delivery device itself may be used as a slider.

In the illustrated robot posture (wherein a tip end of the second wrist element 12 is farther from the wall 110 than the second axis B), the torch cable 3 extends from the welding wire delivery device 4 through a side space of the first wrist element 11 nearer to the wall 110 side (a space opposite to a side to which a tip end of the welding torch 2 is directed) and is connected to the welding torch 2. In this regard, in the same manner as in the first, second and third embodiments, it is also possible to increase the degree of motion freedom of the torch cable 3 by using a freely swingable slider 7 in the slide mechanism (a concrete example thereof will be described later).

In the same manner as in the first embodiment, a mechanism for drawing the slider 7 is formed in which one end of a wire 81 is connected to the vicinity of a rear end of the slider 7 and the other end of the wire 81 is connected to a tensioning device 80. The wire 81 connects the slider 7 to the tensioning device 80 via a pulley 82 attached to the vicinity of a rear end of the support base 5. The tensioning device 80 itself uses a spring, a pneumatic cylinder or the like attached, for example, to a rear portion of the front arm base 10. Due to the existence of such a slide mechanism, a large excessive length of the torch cable 3 is eliminated even if the wrist axis moves considerably.

In this regard, reference numeral 111 denotes a welding wire holding guide attached to the wall 110 for holding the welding wire reeled out from a welding wire drum (not shown) and insertingly guiding the same. The welding wire passing through the welding wire holding guide 111 is combined with a power supply cable 22, an assist gas hose (not shown) or others to complete the torch cable 3.

The power supply to the welding wire and the wire delivery device 4 is carried out via the power supply cable 22 by the welding power source device 21 in the same manner as in the first and the second embodiments. The control of the power supply (control of welding voltage/current and control of wire delivery) is carried out based on a command issued from a robot controller 20. When the welding operation is carried out, the robot 1 moves to a target position at which the welding wire is reeled out so that the welding torch 2 mounted to a tip end of the wrist is located at a welding position on the object to be welded, in accordance with the command from the robot controller 20, while maintaining the welding torch 2 in a designated posture. The robot controller 20 also issues the welding command at the same time to the welding power source device 21 whereby the welding power source device 21 operates in synchronism with the operation of the robot 1 to control the welding voltage and current for the welding wire portion of a tip end of the welding torch.

Similar to the first embodiment, in the arc welding robot of a wall-hanging type according to this embodiment in which the welding wire delivery device is provided on the slide mechanism, it is possible to suppress a large change in the behavior of the torch cable 3 even if the posture of the welding torch 2 varies and to minimize the interference of the torch cable 3 with the work, a jig and peripheral equipment, whereby the stable delivery of the welding wire is realized.

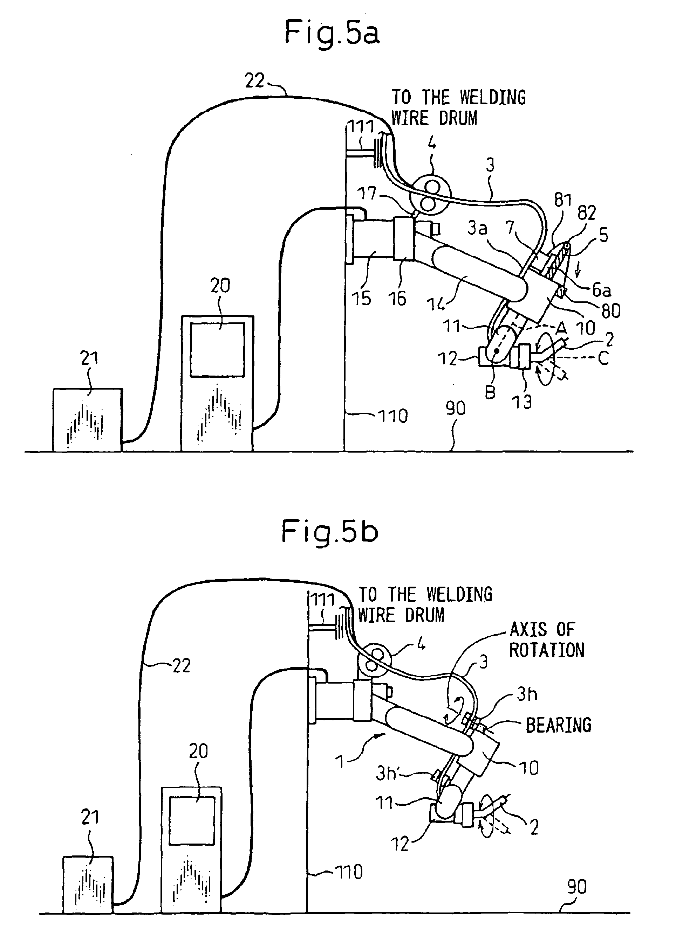

Fig. 5a is a front view of an overall structure of a fifth embodiment of an arc welding robot according to the present invention. This embodiment is a slight modification of the fourth embodiment, and the configuration and the installation system of a robot as well as the attachment of the welding torch are the same as in the fourth embodiment. Accordingly, the difference from the fourth embodiment will be briefly described.

According to this embodiment, a wire delivery device 4 for delivering a welding wire to a welding torch 2 by using a torch cable 3 is provided via a wire delivery device support 17 fixed on a rotary cylinder 16 of a robot 1. A slide mechanism is provided on the lateral side of a front arm base 10 via a support base 5. The slide mechanism includes a linear guide 6a and a slider 7 attached to the linear guide 6a to be movable generally parallel to a first axis A along the linear guide 6a. An intermediate portion of the torch cable 3 is clamped (attached) to the slider 7. In the illustrated posture of the robot (wherein a tip end of the second wrist element 12 is located farther from the wall 110 than the second axis B), the torch cable 3 extends from the intermediate portion 3a, passes through a side space of the first wrist element 11 nearer to the wall 110 (a space opposite to a side to which a tip end of the welding torch directs) and is connected to the welding torch 2. In the same manner as in the third embodiment, one end of a wire 81 is connected to the vicinity of a rear end of the slider 7 and the other end thereof is connected to a tensioning device 80 to form a mechanism for drawing the slider 7. Also, in the same manner as in the first, second and third embodiments, it may be possible to increase the degree of motion freedom of the torch cable 3 by using the freely swingable slider 7 in the slide mechanism (a concrete example thereof will be described later).

Fig. 5b illustrates one modification of the fifth embodiment. In the embodiment shown in Fig. 5b, the slide mechanism is eliminated and, instead, a structure in which an inserting guide 3h is directly provided on a front base 10 is employed. The inserting guide 3h is designed to have a guide hole larger than an outer diameter of the torch cable 3, so that the torch cable 3 freely reciprocates generally parallel to the longitudinal direction of the front arm. Also, as illustrated, a inserting guide 3h' is also provided on the first wrist element 11 to hold the torch cable 3. Even if the robot wrist shaft operates, the torch cable is maintained in a stable state by these inserting guides 3h and 3h' while being always along the front arm. As illustrated, the inserting guide 3h is rotatable about a rotary axis on a bearing.

In the arc welding robot of a wall-hanging type according to this embodiment in which the torch cable is clamped on the slide mechanism, even if the posture of the welding torch 2 varies, the behavior of the torch cable 3 does not largely change, whereby it is possible to minimize the interference of the torch cable 3 with the work, jig or peripheral equipments as well as to realize the stable delivery of the welding wire in the same manner as in the fourth embodiment.

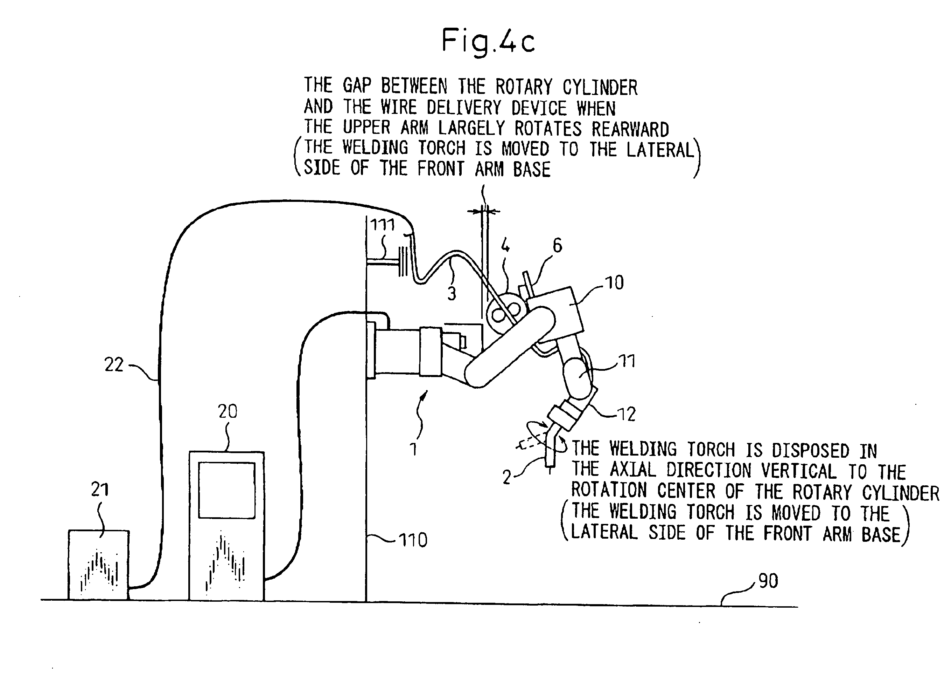

In this regard, in the wall-hanging type robot as in the fourth embodiment, the upper arm 14 often it rotates largely rearward or the welding torch 2 is often disposed in an axial direction vertical to the rotation center of the rotary cylinder 16 of the robot. To avoid such an inconvenience, according to the above-mentioned fourth embodiment, the mounting position of the welding torch 2 and the welding wire delivery device 4 is changed to a lateral surface of the front arm base 10 so that when the upper arm 14 moves rearward, the interference is avoidable and the welding torch 2 is largely movable in an axial direction vertical to the rotation center of the rotary cylinder 16. In Fig. 4c, the robot is illustrated when the upper arm 14 is largely rotated rearward and the welding torch 2 is disposed in the axial direction vertical to the rotation center of the rotary cylinder 16 of the robot.

Although not shown, when the motion of the rotary cylinder 16 during the welding operation is not so large, a structure wherein the welding wire delivery device 4 is fixed to a location other than the robot movable arm may be employable.

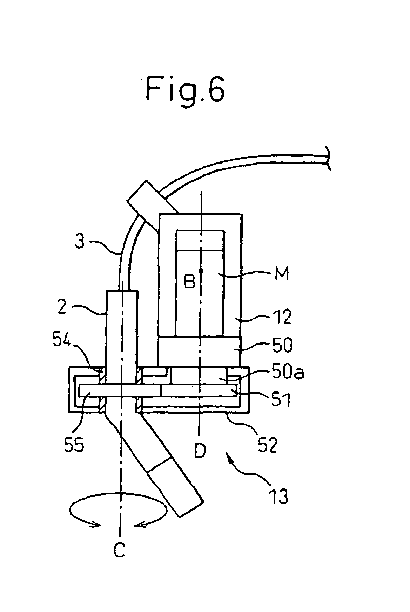

Next, Fig. 6 illustrates an example of a support/rotary mechanism for the welding torch 2. As illustrated, a servomotor M for driving a sixth axis is provided in the second wrist element 12 and coupled to a reduction device 50. The reduction device 50 has a bearing for supporting an output-side flange 50a (hereinafter referred to as an output flange). The output flange 50a rotatably controlled about an axis D via the servomotor M and the reduction device 50 is coupled to an input gear 51.

A gear box housing 52 is mounted to a base portion of the output flange 50a, and the welding torch 2 is mounted to the housing 52 via a bearing 54 to be rotatable about the axis C vertical to the axis B and apart from the axis A (see Fig. 2) at a predetermined distance.

An output gear 55 integral with a welding torch rotation axis is intermeshed with the input gear 51. Thereby, the direction of the welding torch 2 is freely controllable according to the command from the robot controller 20. In this example, the gears are used for transmitting a torque. Of course, other power transmission means, such as a belt/pulley mechanism, may be used.

In this regard, it is preferable that a coupling portion between the welding torch 2 and the torch cable 3 is rotatably supported by a well-known freely rotatable joint structure to enable a change in posture of the welding torch 2 about the longitudinal direction thereof. By such a structure, even if the welding torch 2 is made to rotate about the welding torch axis C, there is no twist in the torch cable 3.

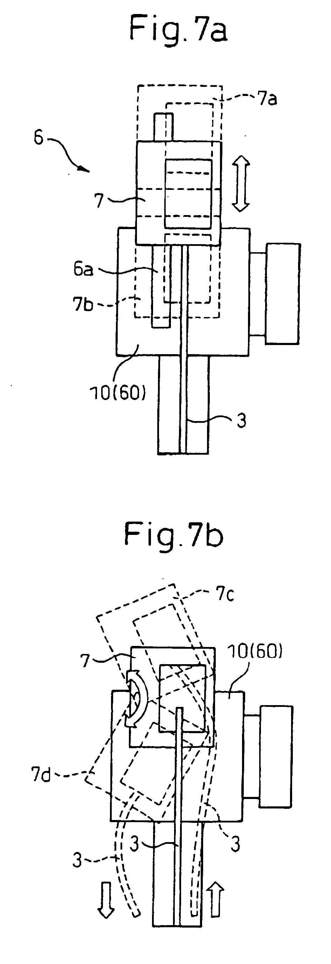

Finally, an example of the slide mechanism will be complementally described with reference to Figs. 7a and 7b. Fig. 7a is an illustration for explaining the slide mechanism of the welding wire delivery device, in which the slider linearly operates. Fig. 7b is an illustration for explaining the slide mechanism of the welding wire delivery device, in which the slider swingably operates.

In Fig. 7a, reference numeral 6a denotes a linear guide provided on a front arm base 10, on which the slider 7 slides. While the wire delivery device is not shown in the drawing, the torch cable 3 draws the slider 7 downward in the drawing via the wire delivery device, and, on the other hand, a force operating opposite to this force (upward in the drawing) is applied to the slider 7 via the wire delivery device as described before. The slider 7 is located at a position wherein these forces are equibrated. As stated above, if the posture of the welding torch 2 varies around the second axis B or the third axis C, the equibrium point of the forces changes in accordance therewith to vary the slider position to 7a or 7b. Even if there is such a change, the posture of the torch cable 3 does not vary so large.

In the swing type slide mechanism shown in Fig. 7b, the degree of motion freedom of the swing motion is added to the degree of upward/downward motion freedom shown in the drawing. As the slide mechanism having such a degree of motion freedom is well-known in the art, a detailed illustration has been eliminated. In the swing type slide mechanism, when the posture of the welding torch 2 varies around the second axis B or the third axis C, a magnitude and direction of a force added from the torch cable 3 to the slider 7 change and in accordance therewith, the slider position changes to 7c or 7d. Regarding the position in the upward/downward direction in the drawing, it is determined to the equibrium point relative to an upward force (derived from the tensioning device 80). Accordingly, even if the posture of the welding torch 2 varies, the posture of the torch cable 3 does not largely change.

Although the invention has been shown and described with exemplarly embodiments thereof, it will be understood, by those skilled in the art, that the foregoing and various other changes, omissions and additions may be made therein and thereto without departing from the scope of the invention as defined in the appended claims.

## Claims

1. A structure for treating a torch cable for an arc welding robot (1), including
a robot base (15) which can be installed on a ceiling (100) or a wall (110), an upper arm (14) extending downward from said ceiling (100) or in the direction away from said wall (110), a front arm including a front arm base (10) and a first wrist element (11), a second wrist element (12) and a welding torch (2) having a torch cable (3) extending therefrom, **characterized in that** said upper arm (14) is connected on a lateral side of a rotary cylinder (16) of the robot base (15) and on the lateral side of said front arm base (10) in order to create a space between said first wrist element (11) and said robot base (15),
said first wrist element (11) is attached to a tip end of said front arm base (10) to be rotatable about a first axis (A) extending in the longitudinal direction of said front arm,
said second wrist element (12) is attached to said first wrist element (11) to be rotatable about a second axis (B) extending generally vertical to said first axis (A), wherein
said welding torch (2) is provided so that a tip end of said welding torch (2) is directed downward from said ceiling (100) when the robot is in a posture wherein a position of said second axis (B) is located above said front arm base (10) or is directed in the direction away from said wall (110) when the robot is in a posture wherein a position of said second axis (B) is located below said front arm base (10) and a tip end of said second wrist element (12) is below the position of said second axis (B) or at a position on a side farther from said wall (110).than said second axis (B), and is rotatable about a third axis (C) extending generally perpendicular to said second axis (B) and is spaced from the crossing point between said second axis (B) and said first axis (A) by a predetermined distance,
a slide mechanism (6) having a slider (7) movable along said first axis (A) is provided on said front arm base (10),
said torch cable (3) extending from said welding torch (2) is attached at an intermediate portion thereof to said slider (7) and further extends from the position attached to said slider (7) to said welding torch (2) while passing throught the space above said first wrist element (11) or nearer to said wall (110) than said first wrist element (11) when the robot is in said posture, and
means (80) for generating a force for drawing said slider (7) is provided in a direction which is parallel to said first axis (A) and is opposite to said welding torch (2).

2. A structure for treating a torch cable for an arc welding robot (1), including
a robot base (15) which can be installed on a ceiling (100) or a wall (110), an upper arm (14) extending downward from said ceiling (100) or in the direction away from said wall (110), a front arm including a front arm base (10) and a first wrist element (11), a second wrist element (12) and a welding torch (2) having a torch cable (3) extending therefrom, **characterized in that** said upper arm (14) is connected on a lateral side of a rotary cylinder (16) of the robot base (15) and on the lateral side of said front arm base (10) in order to create a space between said first wrist element (11) and said robot base (15),
said first wrist element (11) is attached to a tip end of said front arm base (10) to be rotatable about a first axis (A) extending in the longitudinal direction of said front arm,
said second wrist element (12) is attached to said first wrist element (11) to be rotatable about a second axis (B) extending generally vertical to said first axis (A), wherein
said welding torch (2) is provided so that a tip end of said welding torch (2) is directed downward from said ceiling (100) when the robot is in a posture wherein a position of said second axis (B) is located above said front arm base (10) or is directed in the direction away from said wall (110) when the robot is in a posture wherein a position of said second axis (B) is located below said front arm base (10) and a tip end of said second wrist element (12) is below the position of said second axis (B) or at a position on a side farther from said wall (110) than said second axis (B), and is rotatable about a third axis (C) extending generally perpendicular to said second axis (B) and is spaced from the crossing point between said second axis (B) and said first axis (A) by a predetermined distance,
said torch cable (3) extending from said welding torch (2) passes through the space above said first wrist element (11) or nearer to said wall (110) than said first wrist element (11) and is connected via an intermediate guide provided on said front arm base (10) to a wire delivery device (4) provided at a position spaced from said front arm, and
a guiding member (3h) is provided in said intermediate guide for reciprocatedly guiding an intermediate portion of said torch cable (3) along the longitudinal direction of said torch cable (3).

3. A structure for treating a torch cable for an arc welding robot (1) as defined by claim 1 or 2,
**characterized in that** the posture of said torch cable (3) is variable at the intermediate portion thereof attached to said slider (7) about an axis vertical to an attachment surface of said slide mechanism (6).

4. A structure for treating a torch cable for an arc welding robot (1), including
a robot base (15) which can be installed on a ceiling (100) or a wall (110), an upper arm (14) extending downward from said ceiling (100) or in the direction away from said wall (110), a front arm including a front arm base (10) and a first wrist element (11), a second wrist element (12) and a welding torch (2) having a torch cable (3) extending therefrom, **characterized in that** said upper arm (14) is connected on a lateral side of a rotary cylinder (16) of the robot base (15) and on the lateral side of said front arm base (10) in order to create a space between said first wrist element (11) and said robot base (15),
said first wrist element (11) is attached to a tip end of said front arm base (10) to be rotatable about a first axis (A) extending in the longitudinal direction of said front arm,
said second wrist element (12) is attached to said first wrist element (11) to be rotatable about a second axis (B) extending generally vertical to said first axis (A),
wherein said welding torch (2) is provided so that a tip end of said welding torch (2) is directed downward from said ceiling (100) when the robot is in a posture wherein a position of said second axis (B) is located above said front arm base (10) or is directed in the direction away from said wall (110) when the robot is in a posture wherein a position of said second axis (B) is located below said front arm base (10) and a tip end of said second wrist element (12) is below the position of said second axis (B) or at a position on a side farther from said wall (110) than said second axis (B), and is rotatable about a third axis (C) extending generally perpendicular to said second axis (B) and is spaced from the crossing point between said second axis (B) and said first axis (A) by a predetermined distance,
a slide mechanism (6) having a slider (7) movable along said first axis (A) is provided on said front arm base (10),
a welding wire delivery device (4) is attached to said slider (7) for delivering a welding wire to said welding torch (2),
said torch cable (3) extending from said welding torch (2) is arranged so that it passes through said welding wire delivery device (4) and therefrom passes through the space above said first wrist element (11) or nearer to said wall (110) than said first wrist element (11) when the robot is in said posture to reach said welding torch (2), and
means (80) for generating a force for drawing said slider (7) is provided in a direction which is parallel to said first axis (A) and is opposite to said welding torch (2).

5. A structure for treating a torch cable for an arc welding robot (1) as defined by claim 4, **characterized in that** the posture of said welding wire delivery device (4) is variable about an axis vertical to an attachment surface of said slide mechanism (6).

6. A structure for treating a torch cable for an arc welding robot as defined by claim 2, further including a further guiding member (3h') for reciprocatedly guiding an intermediate portion of said torch cable along the longitudinal direction of said torch cable (3),
wherein said further guiding member (3h') is provided on a distal end of a plate-like guide (19) attached to the second wrist element (12) or on the first wrist element (11).

7. A structure for treating a torch cable for an arc welding robot as defined by claim 2, wherein said guiding member is rotatably provided on said intermediate guide via a bearing.

## Patentansprüche

1. Anordnung zum Handhaben eines Schweißkabels für einen Lichtbogenschweißroboter (1) mit
einer Roboterbasis (15), die an einer Decke (100) oder einer Wand (110) anbringbar ist, einem Oberarm (14), der sich von der Decke (100) nach unten oder in die Richtung weg von der Wand (110) erstreckt, einem Vorderarm, der eine Vorderarmbasis (10) und ein erstes Gelenkelement (11) aufweist, einem zweiten Gelenkelement (12) und einem Schweißbrenner (12) mit einem Schweißkabel (3), welches sich von diesem erstreckt,
**dadurch gekennzeichnet, dass** der Oberarm (14) an einer Seite eines Drehzylinders (16) der Roboterbasis (15) und an einer Seite der Vorderarmbasis (10) angebracht ist, um einen Freiraum zwischen dem ersten Gelenkelement (11) und der Roboterbasis (15) zu bilden,
wobei das erste Gelenkelement (11) an einem Ende der Vordarmbasis (10) derart angebracht ist, dass es um eine erste Achse (A) drehbar ist, die sich in der Längsrichtung des Vorderarms erstreckt,
wobei das zweite Gelenkelement (12) an dem ersten Gelenkelement (11) derart angebracht ist, dass es um eine zweite Achse (B) drehbar ist, die sich im wesentlichen senkrecht zu der ersten Achse (A) erstreckt,
wobei der Schweißbrenner (2) derart vorgesehen ist, dass ein Ende des Schweißbrenners (2) von der Decke (100) nach unten gerichtet ist, wenn sich der Roboter in einer Stellung befindet, bei der die zweite Achse (B) oberhalb der Vorderarmbasis (10) liegt, oder in die Richtung weg von der Wand (110) gerichtet ist, wenn sich der Roboter in einer Stellung befindet, bei der die zweite Achse (B) unterhalb der Vorderarmbasis (10) liegt und sich ein Ende des zweiten Gelenkelements (12) unterhalb der zweiten Achse (B) oder in einer Position auf einer Seite befindet, die von der Wand (110) weiter entfernt ist als die zweite Achse (B), und um eine dritte Achse (C) drehbar ist, die sich im wesentlichen senkrecht zu der zweiten Achse (B) erstreckt, und um einen vorbestimmten Abstand von dem Schnittpunkt der zweiten Achse (B) und der ersten Achse (A) angeordnet ist,
wobei ein Gleitmechanismus (6) mit einem Schlitten (7), der entlang der ersten Achse (A) bewegbar ist, an der Vorderarmbasis (10) vorgesehen ist,
wobei das sich von dem Schweißbrenner (2) erstreckende Schweißkabel (3) an einem Zwischenteil von diesem an dem Schlitten (7) angebracht ist und sich das Schweißkabel ferner von der an dem Schlitten (7) angebrachten Stelle zu dem Schweißbrenner (2) erstreckt, während es durch den Freiraum über dem ersten Gelenkelement (11) oder näher an der Wand (110) als das erste Gelenkelement (11) verläuft, wenn sich der Roboter in der Stellung befindet, und
wobei Mittel (80) vorgesehen sind zum Erzeugen einer Kraft zum Ziehen des Schlittens (7) in einer Richtung parallel zu der ersten Achse (A) und entgegengerichtet zu dem Schweißbrenner (2).

2. Anordnung zum Handhaben eines Schweißkabels für einen Lichtbogenschweißroboter (1) mit
einer Roboterbasis (15), die an einer Decke (100) oder einer Wand (110) anbringbar ist, einem Oberarm (14), der sich von der Decke (100) nach unten oder in die Richtung weg von der Wand (110) erstreckt, einem Vorderarm, der eine Vorderarmbasis (10) und ein erstes Gelenkelement (11) aufweist, einem zweiten Gelenkelement (12) und einem Schweißbrenner (2) mit einem sich von diesem erstreckenden Schweißkabel (3),
**dadurch gekennzeichnet, dass** der Oberarm (14) an einer Seite eines Drehzylinders (16) der Roboterbasis (15) und an einer Seite der Vorderarmbasis (10) angebracht ist, um einen Freiraum zwischen dem ersten Gelenkelement (11) und der Roboterbasis (15) zu bilden,
wobei das erste Gelenkelement (11) an einem Ende der Vorderarmbasis (10) derart angebracht ist, dass es um eine erste Achse (A) drehbar ist, die sich in der Längsrichtung des Vorderarms erstreckt,
wobei das zweite Gelenkelement (12) an dem ersten Gelenkelement (11) derart angebracht ist, dass es um eine zweite Achse (B) drehbar ist, die sich im wesentlichen senkrecht zu der ersten Achse (A) erstreckt,
wobei der Schweißbrenner (2) derart vorgesehen ist, dass ein Ende des Schweißbrenners (2) von der Decke (100) nach unten gerichtet ist, wenn sich der Roboter in einer Stellung befindet, bei der die zweite Achse (B) oberhalb der Vorderarmbasis (10) liegt, oder in die Richtung weg von der Wand (110) gerichtet ist, wenn sich der Roboter in einer Stellung befindet, bei der die zweite Achse (B) unterhalb der Vorderarmbasis (10) liegt und sich ein Ende des zweiten Gelenkelements (12) unterhalb der Lage der zweiten Achse (B) oder in einer Lage auf einer Seite weiter entfernt von der Wand (110) als die zweite Achse (B) befindet, und um eine dritte Achse (C) drehbar ist, die sich im wesentlichen senkrecht zu der zweiten Achse (B) erstreckt, und um einen vorbestimmten Abstand von dem Schnittpunkt der zweiten Achse (B) und der ersten Achse (A) beabstandet ist,
wobei das sich von dem Schweißbrenner (2) erstreckende Schweißkabel (3) durch den Freiraum über dem ersten Gelenkelement (11) oder näher an der Wand (110) als das erste Gelenkelement (11) verläuft und über eine an der Vorderarmbasis (10) vorgesehene Zwischenführung mit einer Kabelzuführvorrichtung (4) verbunden ist, die an einer von dem Vorderarm beabstandeten Stelle vorgesehen ist und
wobei ein Führungselement (3h) in der Zwischenführung vorgesehen ist, zum Hin- und Herführen eines Zwischenteils des Schweißkabels (3) entlang der Längsrichtung des Schweißkabels (3).

3. Anordnung zum Handhaben eines Schweißkabels für einen Lichtbogenschweißroboter (1) nach Anspruch 1 oder 2,
**dadurch gekennzeichnet, dass** die Stellung des Schweißkabels (3) an dem an dem Schlitten (7) befestigten Zwischenteil um eine Achse veränderbar ist, die senkrecht zu einer Befestigungsoberfläche des Gleitmechanismus (6) verläuft.

4. Anordnung zum Handhaben eines Schweißkabels für einen Lichtbogenschweißroboter (1) mit
einer Roboterbasis (15), die an einer Decke (100) oder einer Wand (110) anbringbar ist, einem Oberarm (14), der sich von der Decke (100) nach unten oder in die Richtung weg von der Wand (110) erstreckt, einem Vorderarm, der eine Vorderarmbasis (10) und ein erstes Gelenkelement (11) aufweist, einem zweiten Gelenkelement (12) und einem Schweißbrenner (2) mit einem sich von diesem erstreckenden Schweißkabel (3),
**dadurch gekennzeichnet, dass** der Oberarm (14) an einer Seite eines Drehzylinders (16) der Roboterbasis (15) und an einer Seite an der Vorderarmbasis (10) angebracht ist, um einen Freiraum zwischen dem ersten Gelenkelement (11) und der Roboterbasis (15) zu bilden,
wobei das erste Gelenkelement (11) an einem Ende der Vorderarmbasis (10) derart angebracht ist, dass es um eine erste Achse (A) drehbar ist, die sich in der Längsrichtung des Vorderarms erstreckt,
wobei das zweite Gelenkelement (12) an dem ersten Gelenkelement (11) derart angebracht ist, dass es um eine zweite Achse (B) drehbar ist, die sich im wesentlichen senkrecht zu der ersten Achse (A) erstreckt,
wobei der Schweißbrenner (2) derart vorgesehen ist, dass ein Ende des Schweißbrenners (2) von der Decke (100) nach unten gerichtet ist, wenn sich der Roboter in einer Stellung befindet, bei der die zweite Achse (B) oberhalb der Vorderarmbasis (10) liegt, oder in die Richtung weg von der Wand (110) gerichtet ist, wenn sich der Roboter in einer Stellung befindet, bei der die zweite Achse (B) unterhalb der Vorderarmbasis (10) liegt und sich ein Ende des zweiten Gelenkelements (12) unterhalb der Lage der zweiten Achse (B) oder in einer Lage auf einer Seite weiter entfernt von der Wand (110) als die zweite Achse (B) befindet, und um eine dritte Achse (C) drehbar ist, die sich im wesentlichen senkrecht zu der zweiten Achse (B) erstreckt, und um einen vorbestimmten Abstand von dem Schnittpunkt der zweiten Achse (B) und der ersten Achse (A) beabstandet ist,
wobei ein Gleitmechanismus (6) mit einem Schlitten (7) an der Vorderarmbasis (10) vorgesehen ist, der entlang der ersten Achse (A) bewegbar ist,
wobei eine Schweißdrahtzuführungsvorrichtung (4) zum Zuführen eines Schweißdrahts zu dem Schweißbrenner (2) an dem Schlitten (7) angebracht ist,
wobei das sich von dem Schweißbrenner (2) erstreckende Schweißkabel (3) so angeordnet ist, dass es durch die Schweißdrahtzuführungsvorrichtung (4) verläuft und von dieser durch den Freiraum über dem ersten Gelenkelement (11) oder näher an der Wand (110) als das erste Gelenkelement (11) verläuft, wenn sich der Roboter in der Stellung zum Erreichen des Schweißbrenners (2) befindet, und
wobei Mittel (80) zum Erzeugen einer Kraft zum Ziehen des Schlittens (7) vorgesehen sind, die in einer Richtung bereitgestellt wird, die parallel zu der ersten Achse (A) und entgegengerichtet zu dem Schweißbrenner (2) ist.

5. Anordnung zum Handhaben eines Schweißkabels für einen Lichtbogenschweißroboter (1) nach Anspruch 4,
**dadurch gekennzeichnet, dass** die Stellung der Schweißdrahtzuführungsvorrichtung (4) um eine Achse veränderbar ist, die senkrecht zu einer Anbringoberfläche des Gleitmechanismus (6) ist.

6. Anordnung zum Handhaben eines Schweißkabels für einen Lichtbogenschweißroboter nach Anspruch 2,
ferner umfassend ein weiteres Führungselement (3h') zum Hin- und Herführen eines Zwischenteils des Schweißkabels entlang der Längsrichtung des Schweißkabels (3), wobei das weitere Führungselement (3h') an einem entfernten Ende einer plattenartigen Führung (19) vorgesehen ist, die an dem zweiten Gelenkelement (12) oder an dem ersten Gelenkelement (11) angebracht ist.

7. Anordnung zum Handhaben eines Schweißkabels für einen Lichtbogenschweißroboter nach Anspruch 2,
bei dem das Führungselement über ein Lager drehbar an der Zwischenführung vorgesehen ist.

## Revendications

1. Structure de traitement d'un câble de torche pour un robot de soudage à l'arc (1) incluant
une base de robot (15) qui peut être installée sur un plafond (100) ou un mur (110), un bras supérieur (14) s'étendant vers le bas à partir dudit plafond (100) ou dans la direction à l'opposé dudit mur (110), un bras avant incluant une base de bras avant (10) et un premier élément de poignet (11), un deuxième élément de poignet (12) et une torche de soudage (2) ayant un câble de torche (3) s'étendant à partir de celle-ci,
**caractérisée en ce que** ledit bras supérieur (14) est raccordé sur un côté latéral d'un cylindre rotatif (16) de ladite base de robot (15) et sur le côté latéral de ladite base de bras avant (10) afin de créer un espace entre ledit premier élément de poignet (11) et ladite base de robot (15),
ledit premier élément de poignet (11) est fixé à une extrémité de pointe de ladite base de bras avant (10) de façon à être rotatif autour d'un premier axe (A) s'étendant dans la direction longitudinale dudit bras avant,
ledit deuxième élément de poignet (12) est fixé audit premier élément de poignet (11) de façon à être rotatif autour d'un deuxième axe (B) s'étendant généralement verticalement par rapport audit premier axe (A),
dans laquelle ladite torche de soudage (2) est prévue de telle manière qu'une extrémité de pointe de ladite torche de soudage (2) est dirigée vers le bas à partir dudit plafond (100) lorsque le robot est dans une posture dans laquelle une position dudit deuxième axe (B) est située au dessus de ladite base de bras avant (10) ou est dirigée dans la direction à l'opposé dudit mur (110) lorsque le robot est dans une posture dans laquelle une position dudit deuxième axe (B) est située en dessous de ladite base de bras avant (10) et une pointe d'extrémité dudit deuxième élément de poignet (12) est en dessous de la position dudit deuxième axe (B) ou à une position sur un côté plus éloignée dudit mur (110) que ledit deuxième axe (B), et est rotative autour d'un troisième axe (C) s'étendant généralement perpendiculairement audit deuxième axe (B) et est espacée du point de croisement entre ledit deuxième axe (B) et ledit premier axe (A) d'une distance prédéterminée,
un mécanisme de glissement (6) ayant une glissière (7) mobile le long dudit premier axe (A) est prévu sur ladite base de bras avant (10),
ledit câble de torche (3) s'étendant à partir de ladite torche de soudage (2) est fixé au niveau d'une portion intermédiaire de celui-ci à ladite glissière (7) et s'étend en outre de la position fixée à ladite glissière (7) jusqu'à ladite torche de soudage (2) tout en passant à travers l'espace au dessus dudit premier élément de poignet (11) ou plus près dudit mur (110) que ledit premier élément de poignet (11) lorsque le robot est dans ladite posture, et
un moyen (80) pour générer une force pour tirer ladite glissière (7) est prévu dans une direction qui est parallèle audit premier axe (A) et est opposé à ladite torche de soudage (2).

2. Structure de traitement d'un câble de torche pour un robot de soudage à l'arc (1) incluant
une base de robot (15) qui peut être installée sur un plafond (100) ou un mur (110), un bras supérieur (14) s'étendant vers le bas à partir dudit plafond (100) ou dans la direction à l'opposé dudit mur (110), un bras avant incluant une base de bras avant (10) et un premier élément de poignet (11), un deuxième élément de poignet (12) et une torche de soudage (2) ayant un câble de torche (3) s'étendant à partir de celle-ci,
**caractérisée en ce que** ledit bras supérieur (14) est raccordé sur un côté latéral d'un cylindre rotatif (16) de ladite base de robot (15) et sur le côté latéral de ladite base de bras avant (10) afin de créer un espace entre ledit premier élément de poignet (11) et ladite base de robot (15),
ledit premier élément de poignet (11) est fixé à une extrémité de pointe de ladite base de bras avant (10) de façon à être rotatif autour d'un premier axe (A) s'étendant dans la direction longitudinale dudit bras avant,
ledit deuxième élément de poignet (12) est fixé audit premier élément de poignet (11) de façon à être rotatif autour d'un deuxième axe (B) s'étendant généralement verticalement par rapport audit premier axe (A),
dans laquelle ladite torche de soudage (2) est prévue de telle manière qu'une extrémité de pointe de ladite torche de soudage (2) est dirigée vers le bas à partir dudit plafond (100) lorsque le robot est dans une posture dans laquelle une position dudit deuxième axe (B) est située au dessus de ladite base de bras avant (10) ou est dirigée dans la direction à l'opposé dudit mur (110) lorsque le robot est dans une posture dans laquelle une position dudit deuxième axe (B) est située en dessous de ladite base de bras avant (10) et une pointe d'extrémité dudit deuxième élément de poignet (12) est en dessous de la position dudit deuxième axe (B) ou une position sur un côté plus éloignée dudit mur (110) que ledit deuxième axe (B), et est rotative autour d'un troisième axe (C) s'étendant généralement perpendiculairement audit deuxième axe (B) et est espacée du point de croisement entre ledit deuxième axe (B) et ledit premier axe (A) d'une distance prédéterminée,
ledit câble de torche (3) s'étendant à partir de ladite torche de soudage (2) passe à travers l'espace au dessus dudit premier élément de poignet (11) ou plus près dudit mur (110) que ledit premier élément de poignet (11) et est raccordé par l'intermédiaire d'un guide intermédiaire prévu sur ladite base de bras avant (10) à un dispositif d'amenée de fil (4) prévu à une position espacée dudit bras avant, et
un élément de guidage (3h) est prévu dans ledit guide intermédiaire pour guider en va-et-vient une portion intermédiaire dudit câble de torche (3) le long de la direction longitudinale dudit câble de torche (3).

3. Structure de traitement d'un câble de torche pour un robot de soudage à l'arc (1) selon la revendication 1 ou 2,
**caractérisée en ce que** la posture dudit câble de torche (3) est variable au niveau de la portion intermédiaire de celui-ci fixée à ladite glissière (7) autour d'un axe vertical par rapport à une surface de fixation dudit mécanisme de glissement (6).

4. Structure de traitement d'un câble de torche pour un robot de soudage à l'arc (1), incluant
une base de robot (15) qui peut être installée sur un plafond (100) ou un mur (110), un bras supérieur (14) s'étendant vers le bas à partir dudit plafond (100) ou dans la direction à l'opposé dudit mur (110), un bras avant incluant une base de bras avant (10) et un premier élément de poignet (11), un deuxième élément de poignet (12) et une torche de soudage (2) ayant un câble de torche (3) s'étendant à partir de celle-ci,
**caractérisée en ce que** ledit bras supérieur (14) est raccordé sur un côté latéral d'un cylindre rotatif (16) de ladite base de robot (15) et sur le côté latéral de ladite base de bras avant (10) afin de créer un espace entre ledit premier élément de poignet (11) et ladite base de robot (15),
ledit premier élément de poignet (11) est fixé à une extrémité de pointe de ladite base de bras avant (10) de façon à être rotatif autour d'un premier axe (A) s'étendant dans la direction longitudinale dudit bras avant,
ledit deuxième élément de poignet (12) est fixé audit premier élément de poignet (11) de façon à être rotatif autour d'un deuxième axe (B) s'étendant généralement verticalement par rapport audit premier axe (A),
dans laquelle ladite torche de soudage (2) est prévue de telle manière qu'une extrémité de pointe de ladite torche de soudage (2) est dirigée vers le bas à partir dudit plafond (100) lorsque le robot est dans une posture dans laquelle une position dudit deuxième axe (B) est située au dessus de ladite base de bras avant (10) ou est dirigée dans la direction à l'opposé dudit mur (110) lorsque le robot est dans une posture dans laquelle une position dudit deuxième axe (B) est située en dessous de ladite base de bras avant (10) et une pointe d'extrémité dudit deuxième élément de poignet (12) est en dessous de la position dudit deuxième axe (B) ou à une position sur un côté plus éloignée dudit mur (110) que ledit deuxième axe (B), et est rotative autour d'un troisième axe (C) s'étendant généralement perpendiculairement audit deuxième axe (B) et est espacée du point de croisement entre ledit deuxième axe (B) et ledit premier axe (A) d'une distance prédéterminée,
un mécanisme de glissement (6) ayant une glissière (7) mobile le long dudit premier axe (A) est prévu sur ladite base de bras avant (10),
un dispositif d'amenée de fil de soudage (4) est fixé à ladite glissière (7) pour amener un fil de soudage à ladite torche de soudage (2),
ledit câble de torche (3) s'étendant à partir de ladite torche de soudage (2) est agencé de telle manière qu'il passe à travers ledit dispositif d'amenée de fil de soudage (4) et de là passe à travers l'espace au dessus dudit premier élément de poignet (11) ou plus près dudit mur (110) que ledit premier élément de poignet (11) lorsque le robot est dans ladite posture pour atteindre ladite torche de soudage (2), et
un moyen (80) pour générer une force pour tirer ladite glissière (7) est prévu dans une direction qui est parallèle audit premier axe (A) et est opposé à ladite torche de soudage (2).

5. Structure de traitement d'un câble de torche pour un robot de soudage à l'arc (1) selon la revendication 4, **caractérisée en ce que** la posture dudit dispositif d'amenée de fil de soudage (4) est variable autour d'un axe vertical par rapport à une surface de fixation dudit mécanisme de glissement (6).

6. Structure de traitement d'un câble de torche pour un robot de soudage à l'arc (1) selon la revendication 2, incluant en outre un autre élément de guidage (3h') pour guider en va-et-vient une portion intermédiaire dudit câble de torche le long de la direction longitudinale dudit câble de torche (3),
dans laquelle ledit autre élément de guidage (3h') est prévu sur une extrémité distale d'un guide en forme de plaque (19) fixé sur le deuxième élément de poignet (12) ou sur le premier élément de poignet (11).

7. Structure de traitement d'un câble de torche pour un robot de soudage à l'arc selon la revendication 2, dans laquelle ledit élément de guidage est prévu de façon rotative sur ledit guide intermédiaire par l'intermédiaire d'un roulement.
